# EUROPEAN PATENT APPLICATION

(11) **EP 4 840 624 A1**
(43) Date of publication of application: **18.11.2026**
(21) Application number: 26167221.6
(22) Date of filing: 24.03.2026
(51) Int. Cl.: B32B 3/04

(54) **ULTRAHIGH-STRENGTH LIGHT-WEIGHT CEMENT-BASED COMPOSITE MATERIAL AND PREPARATION METHOD THEREFOR**

(30) Priority: 15.05.2025 CN 202510626207
(71) Applicant: Huaxin Building Materials Group Co., Ltd., Wuhan, Hubei 430000 (CN)
(72) Inventor: LI, Yeqing, Wuhan City, Hubei Province, 430000 (CN); RAO, Mei, Wuhan City, Hubei Province, 430000 (CN); JU, Xinjiang, Wuhan City, Hubei Province, 430000 (CN); WAN, Dawei, Wuhan City, Hubei Province, 430000 (CN); WANG, Tianlei, Wuhan City, Hubei Province, 430000 (CN); YU, Songbai, Wuhan City, Hubei Province, 430000 (CN)
(74) Representative: Santarelli

(57) **Abstract**

The present disclosure provides an ultrahigh-strength light-weight cement-based composite material and a preparation method therefor, and belongs to the technical field of protective engineering materials. The ultrahigh-strength light-weight cement-based composite material includes an ultrahigh-strength layer, an ultrahigh-toughness layer, and a buffer central layer, where the ultrahigh-strength layer and the ultrahigh-toughness layer are superposed, and the buffer central layer is embedded into the ultrahigh-strength layer; and the ultrahigh-strength layer is made from a cement-based composite material doped with discontinuous short fibers, the ultrahigh-toughness layer is made from a cement-based composite material doped with continuous fibers, and the buffer central layer is made from a foam concrete material. The ultrahigh-strength layer of the present disclosure improves a front face pit-opening effect formed by the material resisting a direct impact of a projectile by simulating a nano-scale discontinuous stacking structure of a biological shell; the buffer central layer is embedded into the ultrahigh-strength layer to greatly weaken a stress transmitted to the ultrahigh-toughness layer; and the ultrahigh-toughness layer has ultra-high tensile strength and tensile strain, and absorbs impact energy through material deformation, crack propagation and the like.

## Description

### Technical Field

The present disclosure relates to the technical field of protective engineering materials, and particularly relates to an ultrahigh-strength light-weight cement-based composite material and a preparation method therefor.

### Background of the Invention

Although traditional ultra-high performance concrete (UHPC) has ultra-high strength and toughness, its penetration resistance exhibits a significant plateau effect. Research shows that when its compressive strength exceeds 120 MPa, its penetration depth and pit-opening damage amount tend to be decreased flatly. The traditional concrete material is prone to an explosive damage when being subjected to high-speed penetration, with splashing fragments generated to cause a secondary damage; and in the field of impact resistance protection, the traditional concrete material has the outstanding problems of a high self-weight, remarkable brittleness, interlayer performance mismatch and the like.

At present, improving the penetration resistance of concrete has changed from traditional thickening reinforcement into a refined material-structure synergistic design. For example, through a synergistic effect of a high-strength aggregate layer (corundum/ceramic ball) and fiber concrete, a corrugated steel plate restrained multicavity gradient concrete provided by patent CN202310261972.5 has a penetration depth decreased by 64.7% compared with the traditional structure. But the concrete with a current density gradient layered structure still faces the problems: (1) a strength of the material self is not high enough; and (2) a designed layered compact structure cannot fully disperse a shock wave, resulting in spalling, integrity failure and the like.

### Summary of the Invention

In view of the technical problems in the Background, the present disclosure provides an ultrahigh-strength light-weight cement-based composite material and a preparation method therefor, and aims at solving the technical problems that the material's strength is not high enough and a shock wave cannot be fully dispersed in a layered compact structure.

In a first aspect, an example of the present disclosure provides an ultrahigh-strength light-weight cement-based composite material, including an ultrahigh-strength layer, an ultrahigh-toughness layer, and a buffer central layer, where the ultrahigh-strength layer and the ultrahigh-toughness layer are superposed, and the buffer central layer is embedded into the ultrahigh-strength layer; and the ultrahigh-strength layer is made from a cement-based composite material doped with discontinuous short fibers, the ultrahigh-toughness layer is made from a cement-based composite material doped with continuous fibers, and the buffer central layer is made from a foam concrete material.

In some examples, a thickness ratio of the ultrahigh-strength layer, the ultrahigh-toughness layer, and the buffer central layer is 1:(0.6-1.5):(0.1-0.5); and an area ratio of the ultrahigh-strength layer to the buffer central layer is 1:(0.5-0.7).

In some examples, the ultrahigh-strength layer includes an ultrahigh-strength cement matrix and a plurality of discontinuous short fiber layers embedded into the ultrahigh-strength cement matrix, discontinuous short fibers in one discontinuous short fiber layer are arranged in one direction, and discontinuous short fibers in two adjacent discontinuous short fiber layers are arranged at an included angle ranging from -50° to 50°.

In some examples, the ultrahigh-strength cement matrix includes, in parts by mass, 70-90 parts of cement, 10-30 parts of a supplementary cementitious material, 65-110 parts of a fine aggregate, 0.08-4 parts of a water reducing agent, and 16-22 parts of water; and
the discontinuous short fibers are copper-plated steel fibers or stainless-steel fibers, having a diameter of 0.05-0.3 mm, a length of 5-30 mm, and a tensile strength larger than or equal to 2000 MPa.

In some examples, the ultrahigh-toughness layer includes an ultrahigh-toughness cement matrix and a plurality of continuous fiber layers embedded into the ultrahigh-toughness cement matrix, the continuous fibers in one continuous fiber layer are arranged in one direction, and continuous fibers in two adjacent continuous fiber layers are arranged at an included angle ranging from -20° to 20°.

In some examples, the ultrahigh-toughness cement matrix includes, in parts by mass, 70-100 parts of cement, 0-30 parts of a supplementary cementitious material, 0-130 parts of a fine aggregate, 0.08-3 parts of a water reducing agent, and 14-25 parts of water; and
the continuous fibers are one or more of **PP** fibers, **PE** fibers, aramid fibers, carbon fibers and the like, having a diameter of 0.01-0.03 mm, and a tensile strength larger than or equal to 2000 MPa.

In some examples, the supplementary cementitious material is a mixture of superfine mineral powder and silica fume;
the silica fume has a SiO2 content larger than or equal to 90%, and a specific surface area larger than or equal to 10000 m2/kg;
the mineral powder is of S95 grade or higher, having a specific surface area larger than or equal to 700 m2/kg;
the cement used is ordinary silicate cement, with a strength grade of 42.5 or above;
the fine aggregate is a high-aluminum aggregate or a silicon carbide aggregate, with a fineness modulus of 1.6-2.2; and
the water reducing agent used is a solid polycarboxylic acid water reducing agent.

In some examples, the buffer central layer includes 70-100 parts of cement, 0-30 parts of a supplementary cementitious material, 0-30 parts of limestone flour, 0.08-3 parts of a water reducing agent, 0.05-3.5 parts of a foaming agent, 25-40 parts of water, and 1.5-6 parts of chopped fibers; and
the chopped fibers are one or more of **PP** fibers, **PE** fibers, PVA fibers, carbon fibers and the like, having a diameter of 0.015-0.04 mm, a length of 5-30 mm, and a tensile strength larger than or equal to 2800 MPa;
the supplementary cementitious material is a mixture of superfine mineral powder and silica fume;
the silica fume has a SiO2 content larger than or equal to 90%, and a specific surface area larger than or equal to 10000 m2/kg;
the mineral powder is of S95 grade or higher, with a specific surface area larger than or equal to 700 m2/kg;
the cement used is ordinary silicate cement, with a strength grade of 32.5 or above;
the limestone flour has a content of calcium carbonate larger than or equal to 90%, leaving a residue smaller than or equal to 10% on an 80-µm sieve; and
the water reducing agent used is a solid polycarboxylic acid water reducing agent.

In a second aspect, an example of the present disclosure provides a method for preparing an ultrahigh-strength light-weight cement-based composite material, including the following steps:
S1, preparing a buffer central layer:
S11, mixing cement, a supplementary cementitious material, limestone flour, a water reducing agent, and water for stirring to form a concrete slurry; and
S12, preparing a foaming agent into foams, adding the foam to the concrete slurry for uniform stirring, pouring, and curing, and cutting a resultant into a preset size to obtain the buffer central layer;
S2, preparing an ultrahigh-strength layer blank:
S21, mixing cement, a supplementary cementitious material, a fine aggregate, a water reducing agent, and water for stirring to form a first cement-based slurry;
S22, flatly spreading 1/20 to 1/7 of the cement slurry, and uniformly spreading 1/20 to 1/7 of discontinuous short fibers on a surface of the first cement-based slurry in one direction; and
S23, repeating, after the discontinuous short fibers enter the first cement-based slurry, step S22 until a preset thickness is reached, placing the buffer central layer on a surface of the cement slurry, and continuously repeating step S22 until the first cement-based slurry is flush with an upper surface of the buffer central layer to obtain the buffer central layer/ultrahigh-strength layer blank, where discontinuous short fibers in two adjacent layers are spread at an included angle ranging from -50° to 50°;
S3, preparing an ultrahigh-toughness layer blank:
S31, mixing cement, a supplementary cementitious material, a fine aggregate, a water reducing agent, and water for stirring to form a second cement-based slurry;
S32, spreading 1/15 to 1/5 of continuous fibers in one direction on the ultrahigh-strength layer blank, and pouring 1/15 to 1/5 of the second cement-based slurry onto the continuous fibers; and
S33, repeating step S32 until the preset thickness is reached to obtain the buffer central layer/ultrahigh-strength layer blank/ultrahigh-toughness layer blank, where continuous fibers in two adjacent layers are spread at an included angle ranging from -20° to 20°; and
S4, curing the buffer central layer/ultrahigh-strength layer blank/ultrahigh-toughness layer blank to obtain the ultrahigh-strength light-weight cement-based composite material.

In some examples, the curing conditions in step S4 are: a temperature is 18-25°C, a humidity is larger than 95%, and a time lasts for 26-30 days; or steam curing at 90°C is performed for 2 days.

Different from an existing technical solution, the present disclosure has the following beneficial effects:
The ultrahigh-strength layer of the present disclosure is formed by simulating a nano-scale discontinuous stacking structure of a biological shell, using common silicate cement as a base material and discontinuous fibers as an auxiliary reinforcing material. A bionic structure formed by precise pouring enables the cement-based composite material to have excellent mechanical properties such as ultrahigh compression resistance, fracture resistance, and tension resistance with a compressive strength larger than 400 MPa, a tensile strength larger than 40 MPa, and a flexural strength larger than 80 MPa (2-3 times higher than those in the prior art, thereby greatly solving the cracking problem caused by insufficient strength of the material itself). The high-hardness and high-modulus fine aggregate is used to improve a front face pit-opening effect formed by the material resisting a direct impact of a projectile.

Since the shock wave is a spherical wave generally, a stress action born by a periphery of a central part of the material is far greater than that born by the material at an edge. Besides, in order to ensure that the whole material does not lose efficacy, the buffer central layer is embedded into the ultrahigh-strength layer and is made of a foam concrete material. On one hand, the buffer central layer greatly weakens the stress transmitted to the ultrahigh-toughness layer by reflecting, refracting and attenuating a stress wave through the foam concrete with uniform air holes; on the other hand, the buffer central layer reduces a density of the whole structure through light-weight foam concrete.

The ultrahigh-toughness layer has ultra-high tensile strength and tensile strain with a compressive strength larger than 150 MPa, a tensile strength larger than 30 MPa, a flexural strength larger than 60 MPa, and a tensile strain larger than 2%, and absorbs impact energy through material deformation, crack propagation and the like. The continuous fiber material consumes kinetic energy through tensile failure and interlayer slippage of the fibers, and completely achieves an effect of no damage on a back face in a high-speed projectile penetration resistance test.

The above description is merely a summary of the technical solution of the present disclosure. In order to make the technical means of the present disclosure to be understood more clearly and implemented in accordance with the content of the description, and in order to make the above and other objectives, features and advantages of the present disclosure more obvious and easier to understand, specific implementations of the present disclosure are described below.

### Brief Description of the Drawings

In order to illustrate the technical solutions of the present disclosure more clearly, the drawings used in the of the present disclosure will be described briefly below. Apparently, the accompanying drawings in the following description show merely some embodiments of the present disclosure, and a person of ordinary skill in the art may still derive other drawings from these accompanying drawings without creative efforts.

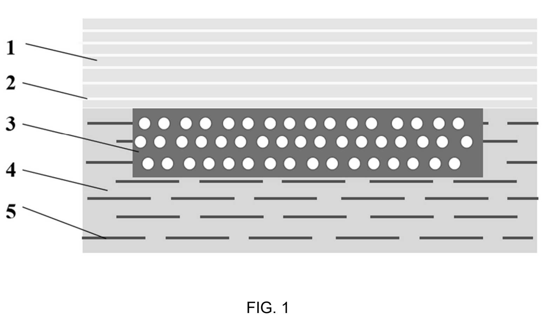

FIG. 1 is a structural diagram of an ultrahigh-strength light-weight cement-based composite material in example 1 of the present disclosure.

Reference numbers: 1. ultrahigh-toughness layer; 2. continuous fiber; 3. buffer central layer; 4. ultrahigh-strength layer; and 5. discontinuous short fiber.

### Detailed Description of Embodiments

The examples of the technical solutions of the present disclosure will be described in detail below with reference to the accompanying drawings. The following examples are only used to more clearly illustrate the technical solutions of the present disclosure, and thus are merely exemplary and are not intended to limit the protection scope of the present disclosure.

Unless defined otherwise, all technical and scientific terms used herein have the same meaning as commonly understood by those skilled in the art to which the present disclosure belongs; the terms used herein are for the purpose of describing specific examples only and are not intended to limit the present disclosure; and the terms "including" and "having" and any variations thereof in the description, claims and drawings of the present disclosure are intended to cover a non-exclusive inclusion.

Some specific examples are listed below. It should be noted that the examples described below are exemplary and merely for explaining the present disclosure, and should not be construed as limiting the present disclosure. If a specific technology or condition is not specified in the examples, it shall be one described in the literature in the art or a product specification. If not marked with the manufacturer, the used reagents or instruments are all commercially available common products.

### I. Preparation method

### Example 1

As shown in FIG. 1, an ultrahigh-strength light-weight cement-based composite material includes an ultrahigh-strength layer 4, an ultrahigh-toughness layer 1, and a buffer central layer 3. The ultrahigh-strength layer 4 and the ultrahigh-toughness layer 1 are superposed, the ultrahigh-strength layer 4 is used for resisting a direct impact of a projectile, and the ultrahigh-toughness layer 1 is positioned on an inner side and absorbs impact energy through material deformation, crack propagation and the like; and the buffer central layer 3 is embedded into one side, close to the ultrahigh-toughness layer 1, of the ultrahigh-strength layer 4, has a side face making a contact to the ultrahigh-toughness layer 1, and is positioned at a center of the ultrahigh-strength layer 4, and the buffer central layer 3 is used for greatly weakening a stress transmitted to the ultrahigh-toughness layer 1 by reflecting, refracting and attenuating a stress wave through foam concrete with uniform air holes.

Thicknesses of the ultrahigh-strength layer 4, the ultrahigh-toughness layer 1, and the buffer central layer 3 are respectively 10 mm, 6 mm, and 5 mm, areas of the ultrahigh-strength layer 4 and the ultrahigh-toughness layer 1 are both 90000 mm2, and an area of the buffer central layer 3 is 63000 mm2.

A method for preparing the ultrahigh-strength light-weight cement-based composite material included the following steps:
S1, Preparing a buffer central layer from foam concrete with a density of 1500 kg/m3 and a flexural strength of 12 MPa. The foam concrete includes the following raw materials in parts by mass: 90 parts of PO42.5 cement, 10 parts of superfine mineral powder, 10 parts of limestone flour, 1.2 parts of a water reducing agent, 1 part of a foaming agent, 30 parts of water, and 2 parts of chopped PVA fibers (having a diameter of 0.015 mm, a length of 10 mm, and a tensile strength of lager than or equal to 3000 MPa).

A method for preparing the buffer central layer includes the following steps:
1) mixing the cement, a supplementary cementitious material, the limestone flour, and the water reducing agent for uniform stirred, adding the water, and continuously stirring the material until completely homogeneous to obtain a concrete slurry;
2) diluting the foaming agent in the water by 40 times, and then preparing foams in a foaming machine, where the prepared foam has a density of 90-100 kg/m3; and
3) adding the foams to the concrete slurry for uniform stirring, then immediately pouring the slurry on layer II until a specified thickness is reached, steam-curing the slurry in a standard curing room at 90°C for 2 days until solidified, demolding the solidified product, and cutting is into square blocks with a thickness of 5 mm and an area of 63000 mm2 to obtain the buffer central layer.

S2, Preparing the ultrahigh-strength layer from a cement-based composite material with a compressive strength larger than 600 MPa, a tensile strength larger than 70 MPa, and a flexural strength larger than 140 MPa. The cement-based composite material includes the following raw materials in parts by mass: 70 parts of a PO52.5 cement, 20 parts of silica fume, 10 parts of mineral powder, 90 parts of a high-aluminum aggregate (with a fineness modulus of 1.6), 1 part of a water reducing agent, 16 parts of water, and 100 parts of steel fibers (which are copper-plated steel fibers with a diameter of 0.12 mm, a length of 20 mm, and a tensile strength of 2850 MPa).

A method for preparing an ultrahigh-strength layer blank includes the following steps:
1) mixing the cement, the supplementary cementitious material, the fine aggregate, and the water reducing agent for uniform stirring, adding the water, and continuously stirring the material until completely homogeneous to form a first cement-based slurry;
2) placing a mold on a vibrating table, adding 1/20 of the first cement-based slurry, and flatly spreading it on a bottom of the mold;
3) then uniformly spreading 1/20 of fibers in one direction until the fibers are completely immersed in the cement slurry;
4) pouring the first cement-based slurry in a same amount as that in step 2), and self-leveling the slurry before uniform spreading of the fibers in a same amount as those in step 3) at an included angle of 0°with the fibers in step 3) until the fibers are completely immersed in the cement slurry without bubbles emerging from a surface of the slurry; and
5) repeating step 4) until a thickness reaches 5 mm, placing the prefabricated buffer central layer at a central symmetrical position of the mold, repeating step 4), and filling a gap between the foam concrete and the mold until the thickness reaches 10 mm, to obtain the buffer central layer/ultrahigh-strength layer blank.

S3, Preparing the ultrahigh-toughness layer blank:
preparing the ultrahigh-toughness layer from a cement-based composite material with a compressive strength larger than 180 MPa, a tensile strength larger than 40 MPa, a flexural strength larger than 100 Mpa, and a tensile strain larger than 2.8%. The cement-based composite material includes the following raw materials in parts by mass: 100 parts of PO52.5 cement, 70 parts of a quartz sand aggregate (with a fineness modulus of 2.2), 0.08 part of a water reducing agent, 18 parts of water, and 6 parts of continuous UHMWPE fibers (with a diameter of 0.015 mm and a tensile strength larger than or equal to 3400 MPa).

A method for preparing an ultrahigh-toughness layer blank includes the following steps:
1) mixing the cement, the supplementary cementitious material, the fine aggregate, and the water reducing agent for uniform stirring, adding the water, and continuously stirring the materials until completely homogeneous to form a second cement-based slurry to be poured;
2) flatly spreading then 1/15 of continuous fibers were on the ultrahigh-strength layer blank in one direction (the same direction as in step 2));
3) horizontally moving 1/15 of the second cement-based slurry to be poured in one direction, and pouring it on the continuous fiber layer;
4) repeating, in a case of no bubble emerging from a surface of the slurry, step 3), with a flat spreading direction of a polymer forming an included angle of 0° with the direction in step 2);
5) horizontally moving 1/5 of the second cement-based slurry to be poured in one direction, and pouring it on the fiber layer; and
6) repeating steps 2)-5) until a thickness reaches 15 mm to obtain the buffer central layer/ultrahigh-strength layer blank/ultrahigh-toughness layer blank, where areas of the ultrahigh-strength layer and the ultrahigh-toughness layer are both 90000 mm2.

S4, Curing the buffer central layer/ultrahigh-strength layer blank/ultrahigh-toughness layer blank for 30 days at a temperature of 25°C and a humidity larger than 95% to obtain the ultrahigh-strength light-weight cement-based composite material.

### Example 2

Example 2 is different from example 1 in that the thicknesses of the ultrahigh-strength layer 4, the ultrahigh-toughness layer 1, and the buffer central layer 3 are respectively 10 mm, 15 mm, and 0.2 mm, the areas of the ultrahigh-strength layer 4 and the ultrahigh-toughness layer 1 are both 90000 mm2, and the area of the buffer central layer 3 is 45000 mm2.

A method for preparing an ultrahigh-strength light-weight cement-based composite material in example 2 includes the following steps:
S1, Preparing a buffer central layer from foam concrete with a density of 1200 kg/m3 and a flexural strength of 5 MPa. The foam concrete includes the following raw materials in parts by mass: 70 parts of PO42.5 cement, 30 parts of superfine mineral powder, 30 parts of limestone flour, 1.2 parts of a water reducing agent, 1.3 part of a foaming agent, 40 parts of water, and 2 parts of chopped PE fibers (with a diameter of 0.025 mm, a length of 15 mm, and a tensile strength larger than or equal to 3000 MPa).

A method for preparing the buffer central layer includes the following steps:
1) mixing the cement, the supplementary cementitious material, the limestone flour, and the water reducing agent for uniform stirring, adding the water, and continuously stirring the material until completely homogeneous to obtain a concrete slurry;
2) diluting the foaming agent in water by 10 times, and then preparing foams with a density of 30-50 kg/m3in a foaming machine; and
3) adding the foams to the concrete slurry to be uniformly stirred, then immediately pouring the slurry on layer II until a specified thickness is reached, steam-curing the slurry in a standard curing room at 90°C for 2 days until solidified, demolding the solidified product, and cutting is into square blocks with a thickness of 0.2 mm and an area of 45000 mm2 to obtain the buffer central layer.

S2, Preparing the ultrahigh-strength layer from a cement-based composite material with a compressive strength larger than 400 MPa, a tensile strength larger than 40 MPa, and a flexural strength larger than 80 MPa. The cement-based composite material includes the following raw materials in parts by mass: 60 parts of PO42.5 cement, 30 parts of silica fume, 10 parts of mineral powder, 130 parts of a silicon carbide aggregate (with a fineness modulus of 2.0), 1.2 part of a water reducing agent, 18 parts of water, and 80 parts of steel fibers (which are copper-plated steel fibers with a diameter of 0.3 mm, a length of 30 mm, and a tensile strength of 2000 MPa).

A method for preparing the ultrahigh-strength layer blank includes the following steps:
1) mixing the cement, the supplementary cementitious material, the fine aggregate, and the water reducing agent for uniform stirring, adding the water, and continuously stirring the materials until completely homogeneous to form a first cement-based slurry;
2) placing a mold on a vibrating table, and adding 1/7 of the first cement-based slurry to be spread flatly on a bottom of the mold;
3) then uniformly spreading 1/7 of fibers in one direction until the fibers are completely immersed in the cement slurry;
4) pouring the first cement-based slurry in the same amount as that in step 2), and self-leveling the slurry before uniform spreading of the fibers with the same amount as those in step 3) at an included angle of 30°with the fibers in step 3) until the fibers are completely immersed in the cement slurry without bubbles emerging from the surface of the slurry; and
5) repeating step 4) until a thickness reaches 9.8 mm, placing the prefabricated buffer central layer at a central symmetrical position of the mold, repeating step 4), and filling a gap between the foam concrete and the mold until the thickness reaches 10 mm, to obtain the buffer central layer/ultrahigh-strength layer blank.

S3, Preparing an ultrahigh-toughness layer blank:
reparing the ultrahigh-toughness layer from a cement-based composite material with a compressive strength larger than 150 MPa, a tensile strength larger than 30 MPa, a flexural strength larger than 60 Mpa, and a tensile strain larger than 2%. The cement-based composite material includes the following raw materials in parts by mass: 100 parts of PO32.5 cement, 90 parts of a quartz sand aggregate (with a fineness modulus of 2.2), 1 part of a water reducing agent, 18 parts of water, and 15 parts of continuous carbon fibers (with a diameter of 0.03 mm and a tensile strength larger than or equal to 3400 MPa).

A method for preparing an ultrahigh-toughness layer blank includes the following steps:
1) mixing the cement, the supplementary cementitious material, the fine aggregate, and the water reducing agent for uniform stirring, adding the water, and continuously stirring the materials until completely homogeneous to form a second cement-based slurry to be poured;
2) then flatly spreading 1/5 of continuous fibers on the ultrahigh-strength layer blank in one same direction (same direction as in step 2));
3) horizontally moving 1/5 of the second cement-based slurry to be poured in one direction, and pouring it on the continuous fiber layer;
4) repeating, in a case of no bubbles emerging from a surface of the slurry, step 3) , with a flat spreading direction of a polymer forming an included angle of 5° with the direction in step 2);
5) horizontally moving 1/5 of the second cement-based slurry to be poured in one direction, and pouring it on the fiber layer; and
6) repeating steps 2)-5) until a thickness reaches 15 mm to obtain the buffer central layer/ultrahigh-strength layer blank/ultrahigh-toughness layer blank, where areas of the ultrahigh-strength layer and the ultrahigh-toughness layer are both 90000 mm2.

S4, Curing the buffer central layer/ultrahigh-strength layer blank/ultrahigh-toughness layer blank for 30 days at a temperature of 25°C and a humidity larger than 95% to obtain the ultrahigh-strength light-weight cement-based composite material.

### Comparative example 1

A UHPC material commercially available in France with 3% by volume of mixed steel fibers and a compressive strength larger than 200 MPa.

### Comparative example 2

A domestic commercially available UHPC material with 3% by volume of mixed steel fibers and a compressive strength larger than 180 MPa.

### Comparative example 3

Comparative example 3 is different from example 1 in no buffer central layer arranged.

### Comparative example 4

Comparative example 4 is different from example 2 in that the ultrahigh-strength layer is formed by directly mixing and pouring the fibers and the cement slurry, and the ultrahigh-toughness layer is formed by directly mixing and pouring equal-length fibers and the cement slurry.

### Comparative example 5

Comparative example 5 is different from example 2 in that the buffer central layer has the same sectional area as the ultrahigh-strength layer.

### II. Test method

1. High-speed projectile penetration resistance test: a projectile impacts a material sample to be detected at a high speed, and a damage depth and area of the sample are detected.

The projectile has a diameter of 6 mm, is in a single-head conical shape, and is made of CAC304 high-strength copper alloy (with a yield strength of 600 MPa, an ultimate strength of 850MPa, and Brinell hardness of 330 HB).

### III. Analysis on test results of each example and comparative example

The ultrahigh-strength light-weight cement-based composite materials prepared in the examples and the comparative examples are subjected to the high-speed projectile penetration resistance test. The test results are shown in Table 1 below.

**Table 1 Results of high-speed projectile penetration resistance tests of materials prepared in examples and comparative examples**

| No. | Density Kg/m³ | Impact speed m/s | Damage area of front face/cm² | Damage depth of front face/mm | Damage area of back face/cm² | Damage depth of back face/mm |
|---|---|---|---|---|---|---|
| Comparative example 1 | 2680 | 600 | 23.7 | 10.7 | 78.8 | 8.2 |
| Comparative example 2 | 2653 | 350 | 18.3 | 6.8 | 17.1 | 2.5 |
| Comparative example 3 | 2675 | 600 | 13.1 | 5.4 | 10.9 | 3.6 |
| Comparative example 4 | 2250 | 350 | 12.0 | 5.1 | 8.2 | 4.7 |
| Comparative example 5 | 2205 | 350 | 8.9 | 3.3 | The buffer layer is destroyed and spalled. | |
| Example 1 | 2305 | 600 | 12.5 | 5.5 | / | / |
| Example 2 | 2241 | 350 | 7.4 | 2.4 | / | / |

It can be seen from Table 1 above that the cement-based composite materials in examples 1 and 2 have excellent penetration resistance, especially resistance to the penetration depth of the front face and resistance to spalling of the back face. Compared with comparative example 1, the damage area and a damage volume of the front face in example 1 are respectively decreased by 47.3% and 49.0%. Besides, the damage of the back face is completely eliminated. Compared with comparative example 2, the damage area and a damage volume of the front face in example 2 are respectively decreased by 59.6% and 64.7%. Besides, the damage of the back face is completely eliminated.

Compared with example 1, in comparative example 3, there is no buffer central layer prepared from the foam concrete, such that a back of the material is still damaged by a stress wave generated by the impact. Therefore, it can be seen that in the ultrahigh-strength light-weight cement-based composite material used by the present disclosure, the ultrahigh-strength concrete layer can obviously reduce the penetration depth and the damage area of the front face; the buffer central layer can greatly weaken a stress transmitted to the ultrahigh-toughness layer by reflecting, refracting and attenuating the stress wave through the foam concrete with uniform air holes; and the ultrahigh-toughness concrete of the ultrahigh-toughness layer can refract and reflect the stress wave to fully dissipate energy through stretching and interlayer slippage of the continuous fibers (such as UHMWPE), and the air holes of the foam concrete, so as to achieve an effect of no spalling of the back face. In addition, the densities in example 1 and example 2 are decreased by 10% or above compared with comparative example 1 and comparative example 2.

In comparative example 4, the fibers used in the ultrahigh-strength layer and the ultrahigh-toughness layer are both directly mixed with the cement slurry for pouring. Compared with example 2, the obtained material has greatly increased damage area and damage depth of the front face, and the back of the material is damaged by the stress wave generated by the impact, indicating that the fiber stacking structure in the present disclosure can greatly improve the mechanical properties of the material, such as the compression resistance, the fracture resistance, the tension resistance and the like.

In comparative example 5, the sectional areas of the buffer central layer and the ultrahigh-strength layer are the same. The damage area and damage depth of the front face of the prepared material are slightly increased compared with example 2. However, the buffer central layer is destroyed and spalled, indicating that embedding the buffer central layer into the ultrahigh-strength layer can reduce the stress transmitted by the stress wave to the ultrahigh-toughness layer. The sectional areas of the buffer central layer and the ultrahigh-strength layer are the same. Without peripheral protection of the ultrahigh-strength layer, the buffer central layer is easily damaged after it is impacted.

It should be noted that the present disclosure is not limited to the above embodiments. The above embodiments are exemplary only, and any embodiment that has substantially the same constitutions as the technical ideas and has the same effects within the scope of the technical solution of the present disclosure falls within the technical scope of the present disclosure. In addition, without departing from the gist of the present disclosure, various modifications that may be conceived by those skilled in the art to the embodiments, and other modes constructed by combining some of the constituent elements of the embodiments also fall within the scope of the present disclosure.

## Claims

1. An ultrahigh-strength light-weight cement-based composite material, comprising an ultrahigh-strength layer, an ultrahigh-toughness layer, and a buffer central layer, wherein the ultrahigh-strength layer and the ultrahigh-toughness layer are superposed, and the buffer central layer is embedded into the ultrahigh-strength layer; and the ultrahigh-strength layer is made from a cement-based composite material doped with discontinuous short fibers, the ultrahigh-toughness layer is made from a cement-based composite material doped with continuous fibers, and the buffer central layer is made from a foam concrete material.

2. The ultrahigh-strength light-weight cement-based composite material according to claim 1, wherein a thickness ratio of the ultrahigh-strength layer, the ultrahigh-toughness layer, and the buffer central layer is 1:(0.6-1.5):(0.1-0.5); and an area ratio of the ultrahigh-strength layer to the buffer central layer is 1:(0.5-0.7).

3. The ultrahigh-strength light-weight cement-based composite material according to claim 1, wherein the ultrahigh-strength layer comprises an ultrahigh-strength cement matrix and a plurality of discontinuous short fiber layers embedded into the ultrahigh-strength cement matrix, discontinuous short fibers in one discontinuous short fiber layer are arranged in one direction, and discontinuous short fibers in two adjacent discontinuous short fiber layers are arranged at an included angle ranging from -50° to 50°.

4. The ultrahigh-strength light-weight cement-based composite material according to claim 3, wherein the ultrahigh-strength cement matrix comprises, in parts by mass, 70-90 parts of cement, 10-30 parts of a supplementary cementitious material, 65-110 parts of a fine aggregate, 0.08-4 parts of a water reducing agent, and 16-22 parts of water; and
the discontinuous short fibers are copper-plated steel fibers or stainless-steel fibers, having a diameter of 0.05-0.3 mm, a length of 5-30 mm, and a tensile strength larger than or equal to 2000 MPa.

5. The ultrahigh-strength light-weight cement-based composite material according to claim 1, wherein the ultrahigh-toughness layer comprises an ultrahigh-toughness cement matrix and a plurality of continuous fiber layers embedded into the ultrahigh-toughness cement matrix, continuous fibers in one continuous fiber layer are arranged in one direction, and continuous fibers in two adjacent continuous fiber layers are arranged at an included angle ranging from -20° to 20°.

6. The ultrahigh-strength light-weight cement-based composite material according to claim 5, wherein the ultrahigh-toughness cement matrix comprises, in parts by mass, 70-100 parts of cement, 0-30 parts of a supplementary cementitious material, 0-130 parts of a fine aggregate, 0.08-3 parts of a water reducing agent, and 14-25 parts of water; and
the continuous fibers are one or more of PP fibers, PE fibers, aramid fibers, carbon fibers and the like, having a diameter of 0.01-0.03 mm, and a tensile strength larger than or equal to 2000 MPa.

7. The ultrahigh-strength light-weight cement-based composite material according to any one of claims 3-6, wherein the supplementary cementitious material is a mixture of superfine mineral powder and silica fume;
the silica fume has a SiO₂ content larger than or equal to 90%, and a specific surface area larger than or equal to 10000 m²/kg;
the mineral powder is of S95 grade or higher, having a specific surface area larger than or equal to 700 m²/kg;
the cement used is ordinary silicate cement with a strength grade of 42.5 or above;
the fine aggregate is a high-aluminum aggregate or a silicon carbide aggregate with a fineness modulus of 1.6-2.2; and
the water reducing agent used is a solid polycarboxylic acid water reducing agent.

8. The ultrahigh-strength light-weight cement-based composite material according to claim 1, wherein the buffer central layer comprises, in parts by mass, 70-100 parts of cement, 0-30 parts of a supplementary cementitious material, 0-30 parts of limestone flour, 0.08-3 parts of a water reducing agent, 0.05-3.5 parts of a foaming agent, 25-40 parts of water, and 1.5-6 parts of chopped fibers; and
the chopped fibers are one or more of PP fibers, PE fibers, PVA fibers, carbon fibers and the like, having a diameter of 0.015-0.04 mm, a length of 5-30 mm, and a tensile strength larger than or equal to 2800 MPa;
the supplementary cementitious material is a mixture of superfine mineral powder and silica fume;
the silica fume has aSiO₂ content larger than or equal to 90%, and a specific surface area larger than or equal to10000 m²/kg;
the mineral powder is of S95 grade or higher, having a specific surface area larger than or equal to 700 m²/kg;
the cement used is ordinary silicate cement, with a strength grade of 32.5 or above;
the limestone flour has a content of calcium carbonate larger than or equal to 90%, leaving a residue smaller than or equal to 10% on an 80-µm sieve; and
the water reducing agent used is a solid polycarboxylic acid water reducing agent.

9. A method for preparing the ultrahigh-strength light-weight cement-based composite material according to any one of claims 1 to 8, comprising the following steps:
S1, preparing a buffer central layer:
S11, mixing cement, a supplementary cementitious material, limestone flour, a water reducing agent, and water for stirring to form a concrete slurry; and
S12, preparing a foaming agent into a foam, adding the foam into the concrete slurry for uniform stirring, pouring, and curing, and cutting a resultant into a preset size to obtain the buffer central layer;
S2, preparing an ultrahigh-strength layer blank:
S21, mixing cement, a supplementary cementitious material, a fine aggregate, a water reducing agent, and water for stirring to form a first cement-based slurry;
S22, flatly spreading 1/20 to 1/7 of the cement slurry, and uniformly spreading 1/20 to 1/7 of discontinuous short fibers on a surface of the first cement-based slurry in one direction; and
S23, repeating, after the discontinuous short fibers enter the first cement-based slurry, step S22 until a preset thickness is reached; placing the buffer central layer on a surface of the cement slurry; and continuously repeating step S22 until the first cement-based slurry is flush with an upper surface of the buffer central layer to obtain a buffer central layer/ultrahigh-strength layer blank, wherein discontinuous short fibers in two adjacent layers are spread at an included angle ranging from -50° to 50°;
S3, preparing an ultrahigh-toughness layer blank:
S31, mixing cement, a supplementary cementitious material, a fine aggregate, a water reducing agent, and water for stirring to form a second cement-based slurry;
S32, spreading 1/15 to 1/5 of continuous fibers in one direction on the ultrahigh-strength layer blank, and pouring 1/15 to 1/5 of the second cement-based slurry onto the continuous fibers; and
S33, repeating step S32 until the preset thickness is reached to obtain the buffer central layer/ultrahigh-strength layer blank/ultrahigh-toughness layer blank, wherein continuous fibers in two adjacent layers are spread at an included angle ranging from -20° to 20°; and
S4, curing the buffer central layer/ultrahigh-strength layer blank/ultrahigh-toughness layer blank to obtain the ultrahigh-strength light-weight cement-based composite material.

10. The method for preparing the ultrahigh-strength light-weight cement-based composite material according to claim 9, wherein curing conditions in step S4 are: a temperature is 18-25°C, a humidity is larger than 95%, and a time lasts for 26-30 days; or steam curing at 90°C is performed for 2 days.
